# EUROPÄISCHE PATENTANMELDUNG

(11) **EP 1 308 375 A2**
(43) Veröffentlichungstag der Anmeldung: **07.05.2003**
(21) Anmeldenummer: 02024179.0
(22) Anmeldetag: 30.10.2002
(51) Int. Cl.: B62D 25/24

(54) **Fahrzeugklappe**

(30) Priorität: 31.10.2001 DE 10153724
(71) Anmelder: Raufoss Germany GmbH, 73054 Eislingen (DE)
(72) Erfinder: Kirschmer, Rolf, 89073 Ulm (DE); Mühlmeister, Jens, 42781 Haan (DE)
(74) Vertreter: Linden, Volker, Dr.

(57) **Zusammenfassung**

Die Erfindung betrifft eine Klappe (1) für ein Fahrzeug mit einer Klappenführung.
Dabei soll die Montage der Klappe (1) dadurch erleichtert werden, dass an der Karosserie (7) des Fahrzeugs ein separater Klappenrahmen (2) angebracht und die Klappenführung am Klappenrahmen (2) und an der Klappe (1) befestigt ist.

## Beschreibung

Die Erfindung betrifft eine Klappe für ein Fahrzeug mit einer Klappenführung. Fahrzeugklappen werden bei der Montage im allgemeinen über die Klappenführung mit der Fahrzeugkarosserie verbunden. Dies ist relativ aufwendig. Außerdem können Ungenauigkeiten bei der Fixierung der Klappenführung im Innenraum des Fahrzeugs die Funktion der Klappenführung beeinträchtigen.
Hinzu kommt insbesondere bei Kofferraumklappen, dass die Klappenführung die Ladeöffnung sowie das Ladevolumen häufig einschränkt.

Die Aufgabe der Erfindung ist es daher, die Montage der Fahrzeugklappe, insbesondere der Klappenführung zu vereinfachen.

Erfindungsgemäß wurde die Aufgabe dadurch gelöst, dass an der Karosserie des Fahrzeugs ein separater Klappenrahmen angebracht ist und die Klappenführung am Klappenrahmen und an der Klappe befestigt ist. Da die Klappe und die Klappenführung am gleichen Element befestigt sind, nämlich dem separaten Klappenrahmen, können Fertigungstoleranzen hinsichtlich der Befestigungspunkte minimiert werden. Außerdem erlaubt dies, dass der Klappenrahmen bereits vor dem Einbau in die Karosserie des Fahrzeugs mit zumindest allen wesentlichen Elementen, insbesondere der Klappe und der Klappenführung verbunden wird.
Zur Erleichterung der Montage und eines eventuell später nötigen Ausbaus sollte der Klappenrahmen lösbar mit der Karosserie verbunden, vorzugsweise verschraubt werden.

Die Klappe kann dabei in einfacher Ausführung als Schwenkklappe ausgebildet sein, wobei die Klappenführung von zumindest einem, vorzugsweise mehreren entlang der Schwenkachse angebrachten Scharnieren gebildet wird.

Besondere Vorteile hat die erfinderische Lösung jedoch, wenn die Klappe als Hubklappe ausgebildet ist. Hierzu kann die Klappenführung von zumindest einem, vorzugsweise mehreren in Hubrichtung schwenkbaren Klappenarmen gebildet werden, welche drehbar mit der Klappe und dem Klappenrahmen verbunden sind. Diese Klappenarme führen die Klappe beim Öffnen aus dem Klappenrahmen in eine Aufklapplage, in der die Klappe die vom Klappenrahmen bestimmte Klappenöffnung freigibt und im allgemeinen parallel zur Zuklapplage angeordnet ist. Die Klappenführung sollte vorzugsweise außerdem zumindest einen schwenkbar mit der Klappe und dem Klappenrahmen verbundenen Führungsarm zur Lagestabilisierung der Klappe während der Hubbewegung umfassen, wobei die Schwenkachsen von denen des Klappenarmes beabstandet sind. Dadurch ergibt sich die Möglichkeit für die Realisierung einer Parallelmechanik als Klappenführung. Die Befestigung der Klappenführung ausschließlich am Klappenrahmen und der Klappe erlaubt eine sehr kompakte Gestaltung der Vorrichtung, was sich positiv auf die Ladeöffnung und das Ladevolumen auswirkt.

Da der Klappenrahmen immer gleich ist, kann die Karosseriegestaltung unabhängig von der Art der Klappe erfolgen, was insbesondere bei der Fahrzeugmontage sowie bei Umbauten von Vorteil ist.

Um die Handhabbarkeit vor allem bei großen Klappen zu erleichtern, sollte wenigstens ein, vorzugsweise mit dem Klappenrahmen und dem Klappenarm verbundenes Federelement vorhanden sein, welches den Übergang der Klappe von einer Zwischenlage in die jeweils näher liegende Aufklapp- oder Zuklapplage unterstützt.
Es ist aber auch möglich, das Öffnen und/oder Schließen der Klappe über zumindest ein Stellglied , beispielsweise einen hydraulischen oder pneumatischen Zylinder oder einen elektrischen Antrieb zu unterstützen oder gänzlich zu bewirken.

Besonders geeignet ist die Anwendung der Lösung bei Klappen, die zum Verschluss des Koffer- oder Stauraumes großer Fahrzeuge, insbesondere von Reisebussen dienen.

Nachfolgend soll die Erfindung an zwei Ausführungsbeispielen näher erläutert werden. In der beigefügten Zeichnung zeigt:
- Figur 1:: einen schematischen Querschnitt einer Schwenkklappe;
- Figur 2:: eine schematische Draufsicht einer Hubklappe;
- Figur 3:: eine schematische Teilansicht der Hubklappe und
- Figur 4:: die Hubklappe in einer Zwischenlage.

In allen Ausführungen handelt es sich um eine Klappe 1 zum Verschluss eines Kofferraumes eines Reisebusses oder des Stauraumes eines anderen Nutzfahrzeuges. Wegen der Größe der Klappe 1 ist dabei eine Klappenführung erforderlich, welche erfindungsgemäß mit der Klappe 1 und einem separaten Klappenrahmen 2 verbunden ist. Der Klappenrahmen 2 wird bei der Montage mit der Karosserie 7 des Fahrzeuges verschraubt und besitzt dabei bereits alle Elemente der Klappenführung sowie die Klappe 1 selbst. Natürlich können diese Elemente und die Klappe 1 auch erst nach der Montage des Klappenrahmens 2 mit diesem verbunden werden.

Der Klappenrahmen 2 ist hier in allen Fällen gleichartig gestaltet, was den Montageprozess des Fahrzeuges und spätere Umbauten vereinfacht. Außerdem ergibt sich durch die Befestigung der Klappenführung am Klappenrahmen 2 eine kompakte Konstruktion, so dass größere Ladeöffnungen und ein größeres Ladevolumen möglich werden. Der Klappenrahmen 2 bildet gleichzeitig auch das Gegenstück für die Schließeinrichtung 8 der Klappe 1.

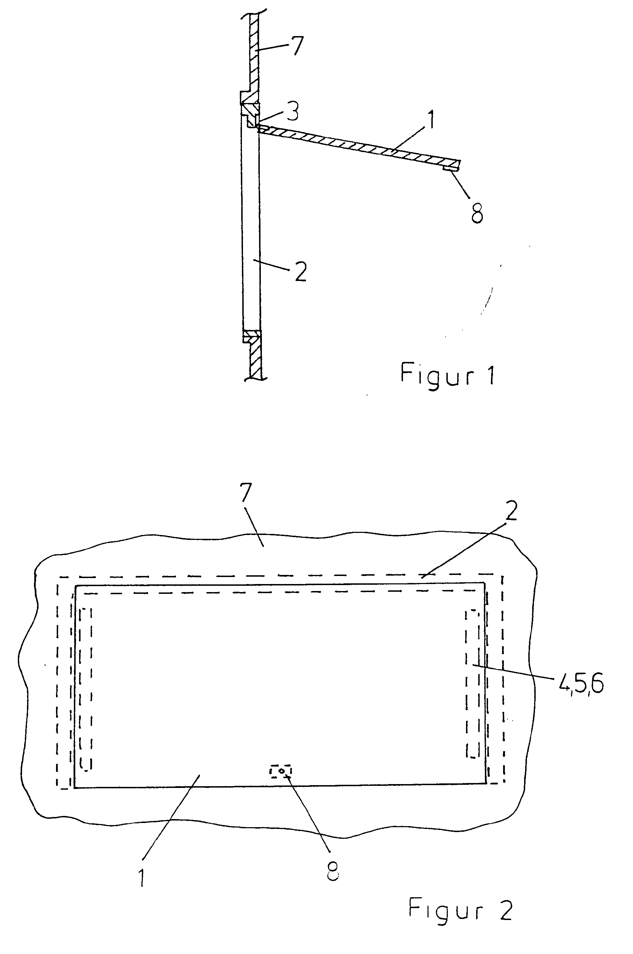

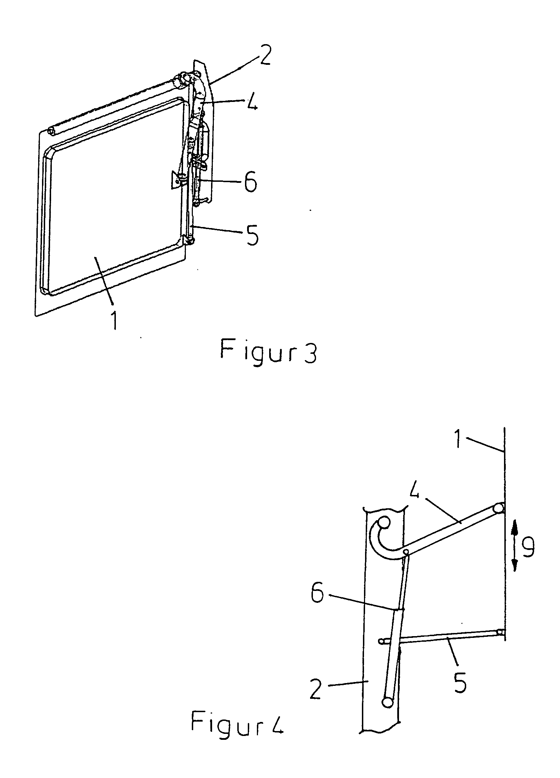

Die in Figur 1 dargestellte Schwenkklappe ist über mehrere entlang der Schwenkachse angebrachte Scharniere 3 mit dem Klappenrahmen 2 verbunden. Diese relativ einfache Ausführung benötigt jedoch Platz für das Schwenken der Klappe 1, so dass verstärkt auch Hubklappen gemäß den Figuren 2 bis 4 zum Einsatz gelangen.

Die Klappenführung der Hubklappe besteht hier aus zwei parallelen und in Hubrichtung 9 schwenkbaren Klappenarmen 4, welche drehbar mit der Klappe 1 und dem Klappenrahmen 2 verbunden sind. Die Klappenarme 4 befinden sich dabei in den parallel zur Hubrichtung 9 verlaufenden Randbereichen der Klappe 1. Des weiteren umfasst die Klappenführung im Bereich jedes Klappenarmes 4 auch einen schwenkbar mit der Klappe 1 und dem Klappenrahmen 2 verbundenen Führungsarm 5. Die Lagestabilisierung der Klappe 1 während der Hubbewegung erfolgt über einen Parallelmechanismus, weshalb zwischen den Schwenkachsen der Klapparme 4 und der, der Führungsarme 5 ein Abstand vorhanden ist.

Um die Bedienung der Klappe 1 zu erleichtern und eindeutige Zustände, nämlich offen oder geschlossen, anzustreben, ist zwischen jedem Klappenarm 4 und dem Klappenrahmen 2 ein Federelement 6 beispielhaft in Form einer Gasdruckfeder vorhanden. Dieses Federelement 6 ist so angeordnet, dass es den Übergang der Klappe 1 von einer Zwischenlage in die jeweils näher liegende Aufklapp- oder Zuklapplage unterstützt. Dies bedeutet, dass das Federelement 6 in der Zwischenlage stärker zusammengedrückt ist als in der Zuklapp- und Aufklapplage.

Da keine Elemente der Klappenführung, wie sonst üblich im Inneren des Kofferraumes befestigt werden müssen, sind einerseits Ungenauigkeiten bei der Montage ausgeschlossen und wird andererseits das Innere des Kofferraumes auch nicht durch diese Elemente beeinträchtigt.

## Patentansprüche

1. Klappe (1) für ein Fahrzeug mit einer Klappenführung, **dadurch gekennzeichnet, dass** an der Karosserie (7) des Fahrzeugs ein separater Klappenrahmen (2) angebracht und die Klappenführung am Klappenrahmen (2) und an der Klappe (1) befestigt ist.

2. Klappe (1) nach Anspruch 1, **dadurch gekennzeichnet, dass** der Klappenrahmen (2) lösbar mit der Karosserie (7) verbunden, vorzugsweise verschraubt ist.

3. Klappe (1) nach Anspruch 1 oder 2, **dadurch gekennzeichnet, dass**
die Klappe (1) als Schwenkklappe ausgebildet ist.

4. Klappe (1) nach Anspruch 3, **dadurch gekennzeichnet, dass**
die Klappenführung von zumindest einem, vorzugsweise mehreren entlang der Schwenkachse angebrachten Scharnieren (3) gebildet wird.

5. Klappe (1) nach Anspruch 1 oder 2, **dadurch gekennzeichnet, dass**
die Klappe (1) als Hubklappe ausgebildet ist.

6. Klappe (1) nach Anspruch 5, **dadurch gekennzeichnet, dass**
die Klappenführung von zumindest einem, vorzugsweise mehreren in Hubrichtung (9) schwenkbaren Klappenarmen (4) gebildet wird, wobei diese schwenkbar mit der Klappe 1 und dem Klappenrahmen (2) verbunden sind.

7. Klappe (1) nach Anspruch 6, **dadurch gekennzeichnet, dass**
die Klappenführung zumindest einen schwenkbar mit der Klappe (1) und dem Klappenrahmen (2) verbundenen Führungsarm (5) zur Lagestabilisierung der Klappe (1) während der Hubbewegung umfasst, wobei die Schwenkachsen von denen des Klappenarmes (4) beabstandet sind.

8. Klappe (1) nach einem der vorhergehenden Ansprüche , **dadurch gekennzeichnet, dass** wenigstens ein, vorzugsweise mit dem Klappenrahmen (2) und dem Klappenarm (4) verbundenes Federelement (6) vorhanden ist, welches den Übergang der Klappe (1) von einer Zwischenlage in die jeweils näher liegende Aufklapp- oder Zuklapplage unterstützt.

9. Klappe (1) nach einem der vorhergehenden Ansprüche, **dadurch gekennzeichnet, daß** das Öffnen und/oder Schließen der Klappe (1) von zumindest einem Stellglied unterstützt, vorzugsweise gänzlich von diesem bewirkt wird

10. Klappe (1) nach einem der vorhergehenden Ansprüche, **dadurch gekennzeichnet, dass** die Klappe (1) zum Verschluss des Koffer- oder Stauraumes großer Fahrzeuge dient.

11. Verfahren zur Montage der Klappe (1), **dadurch gekennzeichnet, dass**
der Klappenrahmen (2) vor dem Einbau in die Karosserie des Fahrzeugs mit zumindest allen wesentlichen Elementen, insbesondere der Klappe (1) und der Klappenführung verbunden ist.
